(19) **Europäisches Patentamt European Patent Office Office européen des brevets**

(11) **EP 4 280 114 B1**

(12) **EUROPEAN PATENT SPECIFICATION**

(45) Date of publication and mention of the grant of the patent:
**11.02.2026 Bulletin 2026/07**

(21) Application number: **21919627.6**

(22) Date of filing: **09.12.2021**

(51) International Patent Classification (IPC):
**G06N 3/08** (2023.01)     **G06N 20/00** (2019.01)
**G06N 3/09** (2023.01)     **G06N 3/096** (2023.01)
**G06N 3/0464** (2023.01)

(52) Cooperative Patent Classification (CPC):
**G06N 3/09; G06N 3/0464; G06N 3/082; G06N 3/096**

(86) International application number:
**PCT/JP2021/045339**

(87) International publication number:
**WO 2022/153738 (21.07.2022 Gazette 2022/29)**

(54) **MACHINE LEARNING DEVICE, MACHINE LEARNING METHOD, AND MACHINE LEARNING PROGRAM**

MASCHINENLERNVORRICHTUNG, MASCHINENLERNVERFAHREN UND MASCHINENLERNPROGRAMM

DISPOSITIF D'APPRENTISSAGE MACHINE, PROCÉDÉ D'APPRENTISSAGE MACHINE ET PROGRAMME D'APPRENTISSAGE MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2021 JP 2021003240**

(43) Date of publication of application:
**22.11.2023 Bulletin 2023/47**

(73) Proprietor: **JVCKENWOOD Corporation Yokohama-shi, Kanagawa 221-0022 (JP)**

(72) Inventors:
• **YANG Yincheng**
  **Yokohama-shi Kanagawa 221-0022 (JP)**
• **TAKEHARA Hideki**
  **Yokohama-shi Kanagawa 221-0022 (JP)**
• **KIDA Shingo**
  **Yokohama-shi Kanagawa 221-0022 (JP)**

(74) Representative: **Schmidbauer, Andreas Konrad Wagner & Geyer Partnerschaft mbB Patent- und Rechtsanwälte Gewürzmühlstrasse 5 80538 München (DE)**

(56) References cited:
**JP-A- 2018 055 259     JP-A- 2018 055 259**

• **ARUN MALLYA ET AL: "PackNet: Adding Multiple Tasks to a Single Network by Iterative Pruning", ARXIV.ORG, CORNELL UNIVERSITY LIBRARY, 201 OLIN LIBRARY CORNELL UNIVERSITY ITHACA, NY 14853, 15 November 2017 (2017-11-15), XP081316404**
• **STEVEN C Y HUNG ET AL: "Compacting, Picking and Growing for Unforgetting Continual Learning", ARXIV.ORG, CORNELL UNIVERSITY LIBRARY, 201 OLIN LIBRARY CORNELL UNIVERSITY ITHACA, NY 14853, 15 October 2019 (2019-10-15), XP081515706**
• **ZIFENG WANG ET AL: "Learn-Prune-Share for Lifelong Learning", ARXIV.ORG, CORNELL UNIVERSITY LIBRARY, 201 OLIN LIBRARY CORNELL UNIVERSITY ITHACA, NY 14853, 13 December 2020 (2020-12-13), XP081837059**
• **GOBINDA SAHA ET AL: "Structured Compression and Sharing of Representational Space for Continual Learning", ARXIV.ORG, CORNELL UNIVERSITY LIBRARY, 201 OLIN LIBRARY CORNELL UNIVERSITY ITHACA, NY 14853, 23 July 2020 (2020-07-23), XP081705347**

- ARUN MALLYA; SVETLANA LAZEBNIK: "PackNet: Adding Multiple Tasks to a Single Network by Iterative Pruning", ARXIV.ORG, CORNELL UNIVERSITY LIBRARY, 201 OLIN LIBRARY CORNELL UNIVERSITY ITHACA, NY 14853, 15 November 2017 (2017-11-15), 201 Olin Library Cornell University Ithaca, NY 14853 , XP080837570

**Description**

[TECHNICAL FIELD]

The present invention relates to machine learning technologies.

[BACKGROUND ART]

Human beings can learn new knowledge through experiences over a long period of time and can maintain old knowledge without forgetting it. Meanwhile, the knowledge of a convolutional neutral network (CNN) depends on the dataset used in learning. To adapt to a change in data distribution, it is necessary to re-train CNN parameters in response to the entirety of the dataset. In CNN, the precision estimation for old tasks will be decreased as new tasks are learned. Thus, catastrophic forgetting cannot be avoided in CNN. Namely, the result of learning old tasks is forgotten as new tasks are being learned in successive learning.

Incremental learning or continual learning is proposed as a scheme to avoid catastrophic forgetting. One scheme for continual learning is PackNet.

Patent document 1 discloses a learning device configured to cause two or more learning modules to share model parameters updated by multiple learning modules.

[Patent Literature 1] JP2010-20446

Attention is drawn to ARUN MALLYA ET AL: "PAckNet: Adding Multiple Tasks to a Single Network by iterative Pruning", ARXIV.ORG, CORNELL UNIVERSTIY LIBRARY, 201 OLIN LIBRARY CORNELL UNIVERSTIY ITHACA, NY 14853, XP081316404, relating to a method for adding multiple tasks to a single deep neural network avoiding catastrophic forgetting. Iterative pruning and network-retraining leads to sequentially packing multiple tasks into a single network.

[SUMMARY OF INVENTION]

The problem of catastrophic forgetting can be avoided in PackNet, which is one scheme for continual learning. In PackNet, however, the number of filters in a model is limited, and there is a problem in that filters will be saturated as new tasks are learned so that the number of tasks that can be learned is limited.

The present invention addresses the issue, and a purpose thereof is to provide a machine learning technology capable of mitigating saturation of filters.

The invention is defined by the appended independent claims. Further embodiments are defined by the appended dependent claims.

[BRIEF DESCRIPTION OF DRAWINGS]

Figs. 1A-1E show continual learning, which is defined as a base technology;
Fig. 2 shows a configuration of a machine learning device according to the embodiment;
Figs. 3A-3E show continual learning performed by the machine learning device of Fig. 2;
Fig. 4 shows an operation of the comparison unit of the machine learning device of Fig. 2; and
Fig. 5 is a flowchart showing a sequence of steps of continual learning performed by the machine learning device of Fig. 2.

[DESCRIPTION OF EMBODIMENTS]

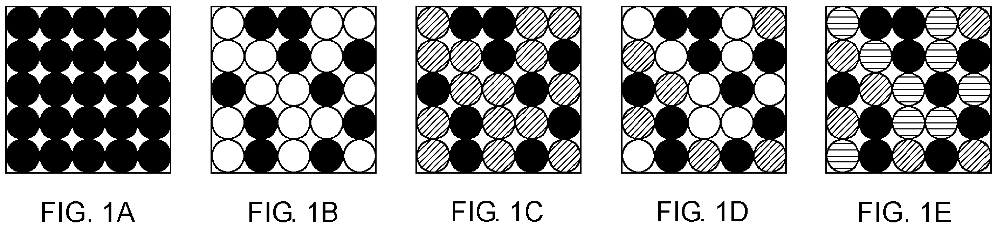

Figs. 1A-1E show continual learning by PackNet, which is defined as a base technology. In PackNet, the weights of multiple filters in a model are trained in response to a given task. The figures show multiple filters in each layer of a convolutional neural network arranged in a lattice.

The learning process in PackNet proceeds in the following steps (A)-(E).

(A) The model learns task 1. Fig. 1A shows an initial state of the filters that have learned task 1. All filters have learned task 1 and are shown in black.

(B) The filters are arranged in the descending order of weight value of the filter. The values of 60% of the entire filters are initialized in the ascending order of weight value. Fig. 1B shows a final state of the filters that have learned task 1. The initialized filters are shown in white.

(C) Task 2 is then learned. In this step, the weight values of the black filters of Fig. 1B are locked. The weight values of only the white filters can be changed. Fig. 1C shows an initial state of the filters that have learned task 2. All filters shown in white in Fig. 1B have learned task 2 and are shown in hatched lines in Fig. 1C.

(D) As in step (B), the hatched filters that have learned task 2 are arranged in the descending order of weight value of the filter. The values of 60% of the entire filters are initialized in the ascending order weight value. Fig. 1D shows a final state of the filters that have learned task 2. The initialized filters are shown in white.

(E) Further, task 3 is learned. In this step, the weight values of the black and hatched filters of Fig. 1D are locked. The weight values of only the white filters can be changed. Fig. 1E shows an initial state of the filters that have learned task 3. All filters shown in white in Fig. 1D have learned task 3 and are shown in horizontal stripes in Fig. 1E.

As learning continues through task N in the learning process according to PackNet in this way, the number of initialized white filters will be increasingly smaller, resulting in saturation. When the filters are saturated, it will no longer be possible to learn a new task.

Saturation of the PackNet filters at some point of time cannot be avoided. However, the speed of saturation of the filters can be mitigated. The embodiment addresses the issue by extracting, every time a new task is learned, overlap filters having a high similarity in weight as shared filters shared by tasks. Of the overlap filters, one filter is left as a shared filter, and the weight of the filters other than the shared filter is initialized to 0. This makes it possible to increase filters that can be learn a new task, mitigate the speed of saturation of the filters, and increase the number of filters that can learn a task.

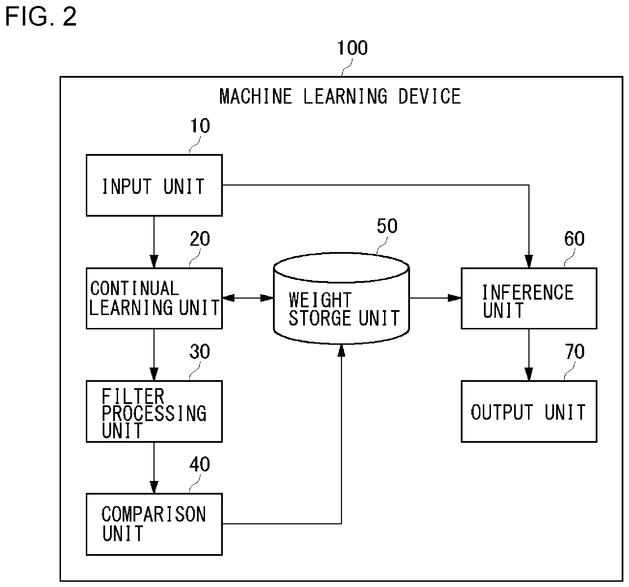

Fig. 2 shows a configuration of a machine learning device 100 according to the embodiment. The machine learning device 100 includes an input unit 10, a continual learning unit 20, a filter processing unit 30, a comparison unit 40, a weight storage unit 50, an inference unit 60, and an output unit 70.

The input unit 10 supplies a supervised task to the continual learning unit 20 and supplies an unknown task to the inference unit 60. By way of one example, the task is image recognition. The task is set to recognize a particular object. For example, task 1 is recognition of a cat, task 2 is recognition of a dog, etc.

The weight storage unit 50 stores the weights of multiple filters used to detect a feature of the task. By running an image through multiple filters, the feature of the image can be captured.

The continual learning unit 20 continually trains the weights of the multiple filters in the weight storage unit 50 in response to the input supervised task and saves the updated filter weights in the weight storage unit 50.

The filter processing unit 30 locks, of the multiple filters that have learned one task, the weights of a predetermined proportion of the filters to prevent them from being used to learn a further task and initializes the weights of the rest of the filters to use them to learn a further task. For example, the filters are arranged in the descending order of filter weight. The weights of 40% of the filters are locked in the descending order of weight value, and the weights of the remaining 60% of the filters are initialized to use them to learn a further task.

When the initialization by the filter processing unit 30 is completed, the comparison unit 40 compares the weights of multiples filters that have learned two or more tasks and extracts overlap filters for which a similarity in weight is equal to or greater than a threshold value as shared filters shared by tasks. The model is a multi-layer convolutional neural network so that a similarly between the weights of multiple filters are calculated in each layer. Of the overlap filters, the comparison unit 40 leaves one filter as a shared filter, initializes the weights of the filters other than the shared filter, and saves the weights in the weight storage unit 50.

The continual learning unit 20 continually trains the initialized weights of the filters other than the shared filter in response to a new task.

The inference unit 60 uses the filter weight saved in the weight storage unit 50 to infer from an input unknown task. The output unit 70 outputs a result of inference by the inference unit 60.

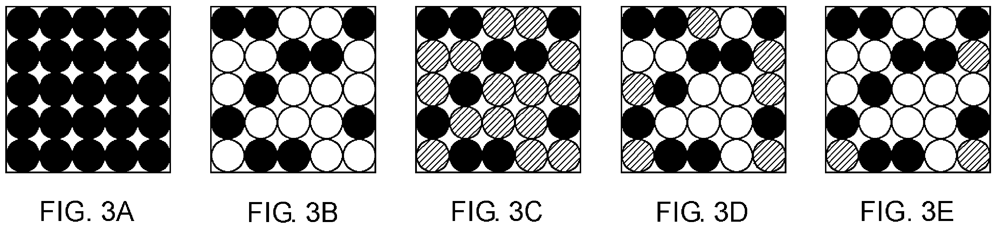

Figs. 3A-3E show continual learning performed by the machine learning device 100 of Fig. 2. Multiple filters in each layer of a convolutional neural network are shown arranged in a lattice, where (i,j) denote a filter in the i-th row and the j-th column.

The learning process in the machine learning device 100 proceeds in the following steps (A)-(E).

(A) The model learns task 1. Fig. 3A shows an initial state of the filters that have learned task 1. All filters have learned task 1 and are shown in black.

(B) The filters are arranged in the descending order of weight value of the filter. The values of 60% of the entire filters are initialized in the ascending order of weight value. Fig. 3B shows a final state of the filters that have learned task 1. The initialized filters are shown in white.

(C) Task 2 is then learned. In this step, the weight values of the black filters of Fig. 3B are locked. The weight values of only the white filters can be changed. Fig. 3C shows an initial state of the filters that have learned task 2. All filters shown in white in Fig. 3B have learned task 2 and are shown in hatched lines in Fig. 3C.

(D) As in step (B), the hatched filters that have learned task 2 are arranged in the descending order of weight value of the filter. The values of 60% of the entire filters are initialized in the ascending order of weight value. Fig. 3D shows an intermediate state of the filters that have learned task 2. The initialized filters are shown in white.

(E) The weights are compared between the black filters that have learned task 1 and the hatched filters that have learned task 2. Those filters for which the similarity exceeds a predetermined threshold value are extracted as overlap filters. Referring to Fig. 3D, for example, the hatched filter (1,3) is similar to the black filter (1,2) so that these filters are determined to be overlap filters. Similarly, the hatched filter (3,1) and the black filter (3,2) are similar overlap filters, and the hatched filter (3,5) and the black filter (4,5) are similar overlap filters.

As shown in Fig. 3E, the hatched filter (1,3) can be substituted for by the similar black filter (1,2) for use so that the weight of the hatched filter (1,3) is initialized to turn it into a white filter, and the black filter (1,2) is defined as a shared filter shared by task 1 and task 2. Similarly, the hatched filter (3,1) is substituted for by the similar black filter (3,2) for use. The weight of the hatched filter (3,1) is initialized to turn it into a white filter. The black filter (3,2) is defined as a shared filter shared by task 1 and task 2. Further, the hatched filter (3,5) is substituted for by the similar black filter (4,5) for use. The weight of the hatched filter (3,5) is initialized to turn it into a white filter. The black filter (4,5) is defined as a shared filter shared by task 1 and task 2.

Fig. 3E shows a final state of the filters that have learned task 2. The initialized white filters are used to learn task 3, and the weights thereof are changed accordingly. Similarly, filters having a small weight value are initialized in the initial state of the filters that have learned task 3. The weights are compared between the filters that have learned task 3, the filters that have learned task 1, and the filters that have learned task 2. When there are overlap filters that have similarity, the filters for task 3 are initialized. This is repeated through task N.

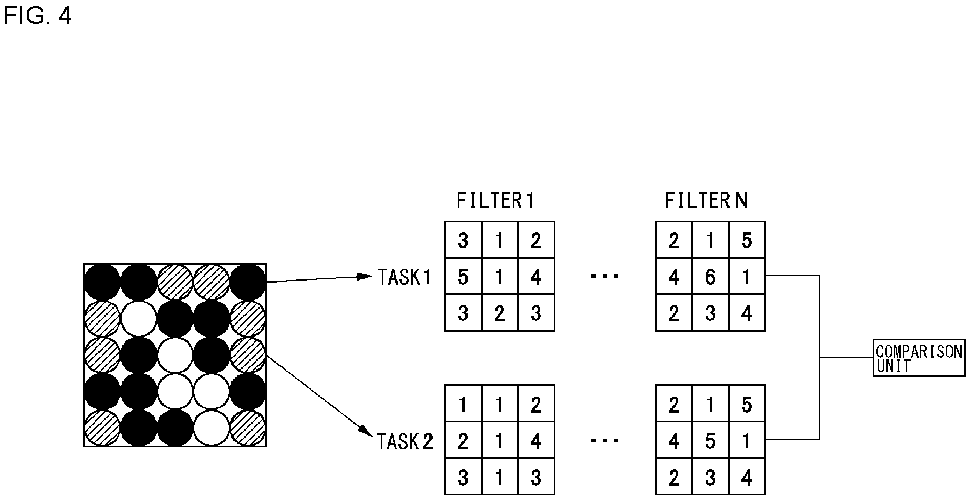

Fig. 4 shows an operation of the comparison unit 40 of the machine learning device 100 of Fig. 2.

In the intermediate state, shown in Fig. 3D, of the filters that have learned task 2, the weights of the filters that have learned task 1 and the weights of the filters that have learned task 2 are compared. Filters having a high similarity in weight are extracted and are defined as targets of initialization.

Since the model includes multiple layers, comparison is made in each layer. For example, one layer includes 128 filters. Given that there are 51 filters that have learned task 1 and 30 filters that have learned task 2, and the remaining filters are initialized, a similarity between the 51 filters for task 1 and the 30 filters for task 2 are calculated.

A similarity is calculated by comparing the absolute values of the filter weight values. In the case of $3\times3$ filters, for example, the absolute values of the nine weights are compared. A threshold value is defined. When the similarity exceeds the threshold value, it is determined that two filters overlap, and the weight of the filter for task 2 is initialized to 0.

Given that each component of filter A is defined by $a_{ij}$ and each component of filter B is defined by $b_{ij}$, a difference in absolute value between the values at the same position in the two filters A, B is calculated as given by $d_1(A, B)$, $d_2(A, B)$, $d_\infty(A,B)$, and $d_m(A, B)$.

$$d_1(\mathbf{A}, \mathbf{B}) = \sum_{i=1}^{n} \sum_{j=1}^{n} |a_{ij} - b_{ij}|$$

$$d_2(\mathbf{A}, \mathbf{B}) = \sqrt{\sum_{i=1}^{n} \sum_{j=1}^{n} (a_{ij} - b_{ij})^2}$$

$$d_\infty(\mathbf{A}, \mathbf{B}) = \max_{1 \leq i \leq n} \max_{1 \leq j \leq n} |a_{ij} - b_{ij}|$$

$$d_m(\mathbf{A}, \mathbf{B}) = \max\{\|(\mathbf{A} - \mathbf{B})\mathbf{x}\| : \mathbf{x} \in \mathbb{R}^n, \|\mathbf{x}\| = 1\}$$

In the above description, a similarly between filters is calculated by calculating a difference in absolute value between the values at the same position in the two filters. A similarly may be calculated by a method other than this. For example, a filter sum of absolute difference is defined for each filter as a sum of a horizontal sum of absolute difference SAD_H and a vertical sum of absolute difference SAD_V such that SAD=SAD_H+SAD_V. When a difference between the filter sum of absolute difference SAD_A of filter A and the filter sum of absolute difference SAD_B of filter B is smaller than a threshold value, it may be determined that filter A and filter B overlap. Given here that components of a $3\times3$ filter in the first row are a1, a2, a3, the components in the second row are a4, a5, a6, and the components in the third row are a7, a8, a9, the horizontal sum of absolute difference SAD_H and the vertical sum of absolute difference SAD_V are given by the following expression.

$$SAD\_H=|a1-a2|+|a2-a3|+|a4-a5|+|a5-a6|+|a7-a8|+|a8-a9|$$

$$SAD\_V=|a1-a4|+|a2-a5|+|a3-a6|+|a4-a7|+|a5-a8|+|a6-a9|$$

As an alternative method of calculating a similarity, comparison of a Euclid distance or a cosine distance may be used.

When filters have a high similarity in weight, the filters are determined to have identical of hardly different characteristics across tasks so that there is no need to maintain a filter that overlaps. Accordingly, one of such filters is initialized and used to learn a further task. The weight is defined as that of one component in a filter. In the case of the $3\times3$ filter of Fig. 4, the weight is defined as that of one cell in the matrix. Alternatively, the weight may be defined in units of filters, i.e., in units of matrices.

More generally speaking, when there is a filter that overlaps across task N and task N+1, the weight of the filter for task N+1 is initialized to 0 in order to maintain the performance at task N at the maximum level. This makes it possible to utilize limited filter resources maximally.

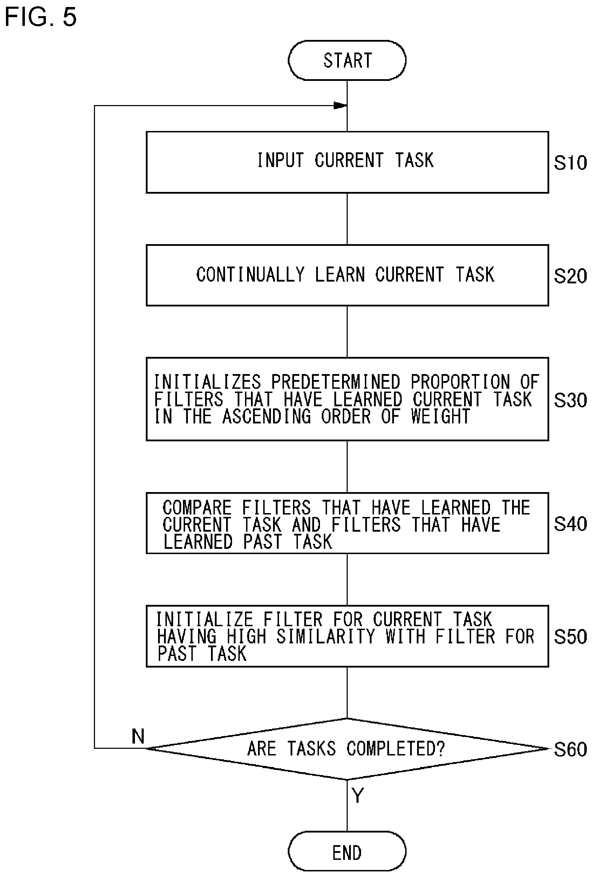

Fig. 5 is a flowchart showing a sequence of steps of continual learning performed by the machine learning device 100 of Fig. 2.

The input unit 10 inputs a current supervised task to the continual learning unit 20 (S10).

The continual learning unit 20 continually trains the weight of multiple filters in response a current task (S20).

The filter processing unit 30 initializes a predetermined proportion of the multiple filters that have learned the current task in the ascending order of weight value (S30).

The comparison unit 40 compares the filters that have learned the current task and the filters that have learned the past task and calculates a similarity in weight (S40).

The comparison unit 40 initializes the filter for the current task having a high similarity with the filter for the past task (S50).

When a task remains, control is returned to step S10, and the next task is input (N in S60). When the tasks have been completed, continual learning is terminated (Y in S60).

The above-described various processes in the machine learning device 100 can of course be implemented by hardware-based devices such as a CPU and a memory and can also be implemented by firmware stored in a read-only memory (ROM), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

As described above, the machine learning device 100 according to the embodiment makes it possible to mitigate the speed of saturation of filters in a continual learning model and to learn more tasks by using filters efficiently.

[INDUSTRIAL APPLICABILITY]

The present invention is applicable to machine learning technologies.

[REFERENCE SIGNS LIST]

10 input unit, 20 continual learning unit, 30 filter processing unit, 40 comparison unit, 50 weight storage unit, 60 inference unit, 70 output unit, 100 machine learning device

**Claims**

1. A machine learning device (100) comprising:

   a weight storage unit (50) that stores weights of a plurality of filters in each layer of a multi-layer convolutional neural network that receives an input image for an image recognition task to recognize a particular object and extracts a feature of the input image;
   a continual learning unit (20) that trains the weights of the plurality of filters in response to the image recognition task to receive the input image and recognize an object in the input image in continual learning;
   a filter processing unit (30) that, of a plurality of filters that have learned one task, locks the weights of a predetermined proportion of the filters to prevent the predetermined proportion of the filters from being used to learn a further task and initializes the weights of other filters to use the other filters to learn a further task; and

a comparison unit (40) that compares in each layer the weights of a plurality of filters that have learned two or more tasks and extracts overlap filters having a similarity in weight equal to or greater than a predetermined threshold value as shared filters shared by tasks.

2. The machine learning device (100) according to claim 1, wherein
the comparison unit (40) leaves one of the overlap filters as the shared filter and initializes the weights of filters other than the shared filter.

3. The machine learning device (100) according to claim 2, wherein
the continual learning unit (20) trains initialized weights of filters other than the shared filter in response to a further task in continual learning.

4. A computer-implemented machine learning method comprising:

training weights of a plurality of filters in each layer of a multi-layer convolutional neural network that receives an input image for an image recognition task to recognize a particular object and extracts a feature of the input image in response to the image recognition task to receive the input image and recognize an object in the input image in continual learning;
of a plurality of filters that have learned one task, locking the weights of a predetermined proportion of the filters to prevent the predetermined proportion of the filters from being used to learn a further task and initializing the weights of other filters to use the other filters to learn a further task; and
comparing in each layer the weights of a plurality of filters that have learned two or more tasks, leaving one of overlap filters having a similarity in weight equal to or higher than a predetermined threshold value, and initializing the weights of other filters to use the other filters to learn a further task.

5. A machine learning program comprising computer-implemented modules including:

a module that trains weights of a plurality of filters in each layer of a multi-layer convolutional neural network that receives an input image for an image recognition task to recognize a particular object and extracts a feature of the input image in response to the image recognition task to receive the input image and recognize an object in the input image in continual learning;
a module that, of a plurality of filters that have learned one task, locks the weights of a predetermined proportion of the filters to prevent the predetermined proportion of the filters from being used to learn a further task and initializes the weights of other filters to use the other filters to learn a further task; and
a module that compares in each layer the weights of a plurality of filters that have learned two or more tasks, leaves one of overlap filters having a similarity in weight equal to or higher than a predetermined threshold value, and initializes the weights of other filters to use the other filters to learn a further task.

**Patentansprüche**

1. Eine maschinelle Lern-Einrichtung (100), die Folgendes aufweist:

eine Gewichtungsspeichereinheit (50), die die Gewichtungen einer Vielzahl von Filtern in jeder Schicht eines mehrschichtigen Neuronalen Faltungs-Netzwerks speichert, das ein Eingangsbild für eine Bilderkennungsaufgabe empfängt, um ein bestimmtes Objekt zu erkennen, und ein Merkmal des Eingangsbildes extrahiert;
eine kontinuierliche Lerneinheit (20), die die Gewichtungen der Vielzahl der Filter als Reaktion auf die Bilderkennungsaufgabe trainiert, um das Eingangsbild zu empfangen und ein Objekt im Eingangsbild in kontinuierlichem Lernen zu erkennen;
eine Filterverarbeitungseinheit (30), die von einer Vielzahl von Filtern, die eine Aufgabe gelernt haben, die Gewichtungen eines vorbestimmten Anteils der Filter sperrt, um zu verhindern, dass der vorbestimmte Anteil der Filter zum Lernen einer weiteren Aufgabe verwendet wird, und die Gewichtungen anderer Filter initialisiert, um die anderen Filter zum Lernen einer weiteren Aufgabe zu verwenden; und
eine Vergleichseinheit (40), die in jeder Schicht die Gewichtungen einer Vielzahl von Filtern, die zwei oder mehr Aufgaben gelernt haben, vergleicht und Überlappungsfilter mit einer Gewichtungsähnlichkeit, die gleich oder größer als ein vorbestimmter Schwellenwert ist, als gemeinsame Filter extrahiert, die von den Aufgaben gemeinsam genutzt werden.

**2.** Maschinelle Lern-Einrichtung (100) nach Anspruch 1, wobei
die Vergleichseinheit (40) einen der Überlappungsfilter als gemeinsamen Filter belässt und die Gewichtungen der Filter außer dem gemeinsamen Filter initialisiert.

**3.** Maschinelle Lern-Einrichtung (100) nach Anspruch 2, wobei
die kontinuierliche Lerneinheit (20) initialisierte Gewichtungen von Filtern, die nicht der gemeinsame Filter sind, als Reaktion auf eine weitere Aufgabe bei kontinuierlichem Lernen trainiert.

**4.** Ein computerimplementiertes maschinelles Lernverfahren, das Folgendes aufweist:

Trainieren der Gewichtungen einer Vielzahl von Filtern in jeder Schicht eines mehrschichtigen neuronalen Faltungs-Netzes, das ein Eingabebild für eine Bilderkennungsaufgabe empfängt, um ein bestimmtes Objekt zu erkennen, und ein Merkmal des Eingabebildes als Reaktion auf die Bilderkennungsaufgabe extrahiert, um das Eingabebild zu empfangen und ein Objekt im Eingabebild in kontinuierlichem Lernen zu erkennen;
einer Vielzahl von Filtern, die eine Aufgabe gelernt haben, Sperren der Gewichtungen eines vorbestimmten Anteils der Filter, um zu verhindern, dass der vorbestimmte Anteil der Filter zum Lernen einer weiteren Aufgabe verwendet wird, und Initialisieren der Gewichtungen anderer Filter, um die anderen Filter zum Lernen einer weiteren Aufgabe zu verwenden; und
Vergleichen, in jeder Schicht, der Gewichtungen einer Vielzahl von Filtern, die zwei oder mehr Aufgaben gelernt haben, wobei einer der Überlappungsfilter mit einer Gewichtungsähnlichkeit, die gleich oder größer als ein vorbestimmter Schwellenwert ist, belassen wird, und die Gewichtungen anderer Filter zu initialisieren, um die anderen Filter zum Lernen einer weiteren Aufgabe zu verwenden.

**5.** Ein maschinelles Lernprogramm, das computerimplementierte Module aufweist, darunter:

ein Modul, das die Gewichtungen einer Vielzahl von Filtern in jeder Schicht eines mehrschichtigen neuronalen Faltungsnetzes trainiert, das ein Eingabebild für eine Bilderkennungsaufgabe zum Erkennen eines bestimmten Objekts empfängt und ein Merkmal des Eingabebildes als Reaktion auf die Bilderkennungsaufgabe extrahiert, um das Eingabebild zu empfangen und ein Objekt im Eingabebild in kontinuierlichem Lernen zu erkennen;
ein Modul, das von einer Vielzahl von Filtern, die eine Aufgabe gelernt haben, die Gewichtungen eines vorbestimmten Anteils der Filter sperrt, um zu verhindern, dass der vorbestimmte Anteil der Filter zum Lernen einer weiteren Aufgabe verwendet wird, und die Gewichtungen anderer Filter initialisiert, um die anderen Filter zum Lernen einer weiteren Aufgabe zu verwenden; und
ein Modul, das in jeder Schicht die Gewichtungen einer Vielzahl von Filtern vergleicht, die zwei oder mehr Aufgaben gelernt haben, einen Überlappungsfilter mit einer Gewichtungsähnlichkeit, die gleich oder geößer als ein vorbestimmter Schwellenwert ist, belässt und die Gewichtungen anderer Filter initialisiert, um die anderen Filter zum Lernen einer weiteren Aufgabe zu verwenden.

## Revendications

**1.** Dispositif d'apprentissage automatique (100) comprenant :

une unité de stockage de poids (50) qui stocke des poids d'une pluralité de filtres dans chaque couche d'un réseau neuronal à convolution à plusieurs couches qui reçoit une image d'entrée pour une tâche de reconnaissance d'image pour reconnaître un objet particulier et qui extrait une caractéristique de l'image d'entrée ;
une unité d'apprentissage continu (20) qui entraîne les poids de la pluralité de filtres en réponse au fait que la tâche de reconnaissance d'image reçoive l'image d'entrée et reconnaisse un objet dans l'image d'entrée dans l'apprentissage continu ;
une unité de traitement de filtres (30) qui, parmi une pluralité de filtres ayant appris une tâche, verrouille les poids d'une proportion prédéterminée des filtres pour empêcher que la proportion prédéterminée des filtres ne soit utilisée pour apprendre une tâche supplémentaire, et initialise les poids d'autres filtres pour utiliser les autres filtres pour apprendre une tâche supplémentaire ; et
une unité de comparaison (40) qui compare dans chaque couche les poids d'une pluralité de filtres ayant appris deux tâches ou plus et qui extrait des filtres de chevauchement ayant une similarité de poids égale ou supérieure à une valeur seuil prédéterminée comme filtres partagés par des tâches.

**2.** Dispositif d'apprentissage automatique (100) selon la revendication 1, dans lequel

l'unité de comparaison (40) laisse l'un des filtres de chevauchement comme filtre partagé et initialise les poids des filtres autres que le filtre partagé.

3. Dispositif d'apprentissage automatique (100) selon la revendication 2, dans lequel l'unité d'apprentissage continu (20) entraîne des poids initialisés de filtres autres que le filtre partagé en réponse à une tâche supplémentaire dans l'apprentissage continu.

4. Procédé d'apprentissage automatique mis en œuvre par ordinateur, comprenant :

l'entraînement de poids d'une pluralité de filtres dans chaque couche d'un réseau neuronal à convolution à plusieurs couches qui reçoit une image d'entrée pour une tâche de reconnaissance d'image pour reconnaître un objet particulier et qui extrait une caractéristique de l'image d'entrée en réponse au fait que la tâche de reconnaissance d'image reçoive l'image d'entrée et reconnaisse un objet dans l'image d'entrée dans l'apprentissage continu ;

parmi une pluralité de filtres ayant appris une tâche, le verrouillage des poids d'une proportion prédéterminée des filtres pour empêcher que la proportion prédéterminée des filtres ne soit utilisée pour apprendre une tâche supplémentaire, et l'initialisation des poids d'autres filtres pour utiliser les autres filtres pour apprendre une tâche supplémentaire ; et

la comparaison dans chaque couche des poids d'une pluralité de filtres ayant appris deux tâches ou plus, la conservation de l'un des filtres de chevauchement ayant une similarité de poids égale ou supérieure à une valeur seuil prédéterminée, et l'initialisation des poids d'autres filtres pour utiliser les autres filtres pour apprendre une tâche supplémentaire.

5. Programme d'apprentissage automatique comprenant des modules mis en œuvre par ordinateur, comportant :

un module qui entraîne des poids d'une pluralité de filtres dans chaque couche d'un réseau neuronal à convolution à plusieurs couches qui reçoit une image d'entrée pour une tâche de reconnaissance d'image pour reconnaître un objet particulier et qui extrait une caractéristique de l'image d'entrée en réponse au fait que la tâche de reconnaissance d'image reçoive l'image d'entrée et reconnaisse un objet dans l'image d'entrée dans l'apprentissage continu ;

un module qui, parmi une pluralité de filtres ayant appris une tâche, verrouille les poids d'une proportion prédéterminée des filtres pour empêcher que la proportion prédéterminée des filtres ne soit utilisée pour apprendre une tâche supplémentaire, et qui initialise des poids d'autres filtres pour utiliser les autres filtres pour apprendre une tâche supplémentaire ; et

un module qui compare dans chaque couche les poids d'une pluralité de filtres ayant appris deux tâches ou plus, conserve un des filtres de chevauchement ayant une similarité de poids égale ou supérieure à une valeur seuil prédéterminée, et initialise les poids d'autres filtres pour utiliser les autres filtres pour apprendre une tâche supplémentaire.

FIG. 1A          FIG. 1B          FIG. 1C          FIG. 1D          FIG. 1E

EP 4 280 114 B1

FIG. 2

FIG. 3E

FIG. 3D

FIG. 3C

FIG. 3B

FIG. 3A

FIG. 4

FILTER 1

| 3 | 1 | 2 |
| 5 | 1 | 4 |
| 3 | 2 | 3 |

FILTER N

| 2 | 1 | 5 |
| 4 | 6 | 1 |
| 2 | 3 | 4 |

TASK 1   · · ·

FILTER 1

| 1 | 1 | 2 |
| 2 | 1 | 4 |
| 3 | 1 | 3 |

FILTER N

| 2 | 1 | 5 |
| 4 | 5 | 1 |
| 2 | 3 | 4 |

TASK 2   · · ·

COMPARISON UNIT

FIG. 5

```
                    ┌─────────────┐
                    │    START    │
                    └─────────────┘
                           │
          ┌────────────────▼────────────────────┐
          │                                      │  S10
          │         INPUT CURRENT TASK           │
          │                                      │
          └────────────────┬────────────────────┘
                           │
          ┌────────────────▼────────────────────┐
          │                                      │  S20
          │     CONTINUALLY LEARN CURRENT TASK   │
          │                                      │
          └────────────────┬────────────────────┘
                           │
          ┌────────────────▼────────────────────┐
          │ INITIALIZES PREDETERMINED PROPORTION OF │  S30
          │ FILTERS THAT HAVE LEARNED CURRENT TASK  │
          │ IN THE ASCENDING ORDER OF WEIGHT        │
          └────────────────┬────────────────────┘
                           │
          ┌────────────────▼────────────────────┐
          │ COMPARE FILTERS THAT HAVE LEARNED THE │  S40
          │ CURRENT TASK AND FILTERS THAT HAVE    │
          │ LEARNED PAST TASK                     │
          └────────────────┬────────────────────┘
                           │
          ┌────────────────▼────────────────────┐
          │ INITIALIZE FILTER FOR CURRENT TASK    │  S50
          │ HAVING HIGH SIMILARITY WITH FILTER FOR│
          │ PAST TASK                             │
          └────────────────┬────────────────────┘
                           │
          N      ◇─────────▼─────────◇  S60
          ◄──────  ARE TASKS COMPLETED?
                   ◇─────────┬─────────◇
                           Y │
                    ┌────────▼────┐
                    │     END     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010020446 A

**Non-patent literature cited in the description**

- PAckNet: Adding Multiple Tasks to a Single Network by iterative Pruning. **ARUN MALLYA et al.** ARXIV.ORG, CORNELL UNIVERSTIY LIBRARY, 201 OLIN LIBRARY. CORNELL UNIVERSTIY ITHACA